# EUROPEAN PATENT APPLICATION

(11) **EP 1 176 352 A1**
(43) Date of publication of application: **30.01.2002**
(21) Application number: 01305915.9
(22) Date of filing: 09.07.2001
(51) Int. Cl.: F16L 11/115, F16L 11/12, F16L 11/24

(54) **Hoses and equipment**

(30) Priority: 26.07.2000 GB 0018190
(71) Applicant: Smiths Group plc, London, NW11 8DS (GB)
(72) Inventor: Gibson, Diane, Clydebank G81 2UG Scotland (GB); McGaw, Derek Robert Harkness, Lennoxtown near Glasgow G67 7LE Scotland (GB)
(74) Representative: Flint, Jonathan McNeill

(57) **Abstract**

A vacuum cleaner hose 2 has a helical reinforcement 22 and a compressible channel 26 extending along the hose between the reinforcement. The channel 26 is formed between two overlapping layers 24 of flexible material bonded together where they extend over the reinforcement 22 and unbonded where they extend between the reinforcement. Passages 31, 32, 33 containing valves 36, 37 connect one end of the channel 26 to the outlet 12 of a vacuum cleaner pump 10 and to its inlet 12 so that air can be either supplied to the channel 26 to extend the hose 2 or withdrawn from the channel to retract the hose.

## Description

This invention relates to flexible hoses of the kind having a wall defining a main bore extending axially along the hose, the wall including a helical channel extending around the hose along its length.

The invention is more particularly concerned with hoses for use with vacuum cleaners and with vacuum cleaner equipment including hoses.

Vacuum cleaners may be of the upright kind where cleaning suction is applied by means of a pump having an inlet directly below the machine. Cylinder vacuum cleaners, by contrast, have an inlet to which one end of a hose is connected, the other end being connected to a suction head. Upright cleaners also usually have provision by which a hose can be connected to the inlet so that a hand-held suction head can be used to clean regions that would otherwise be inaccessible to the machine. The hoses used with vacuum cleaners tend to be bulky so that they have to be stored separately from the cleaner. An alternative hose available on some vacuum cleaners as sold by the major manufacturers has stretch characteristics with a natural, retracted length when not in use that is less than its extended length when in use. The extended length may be about five times the retracted length. Although this hose has the advantage of being much easier to store than conventional hoses, its resilience may make it more difficult to use in some situations, because there is a constant force tending to shorten the hose, which is exacerbated by the reduced pressure within the hose.

It is an object of the present invention to provide an alternative hose and equipment including such a hose.

According to one aspect of the present invention there is provided a flexible hose of the above-specified kind, characterised in that the channel is expansible such that the hose can be extended by supplying fluid to the channel to expand the channel.

The fluid is preferably air. The hose preferably includes a helical reinforcement member, the channel extending between turns of the reinforcement member. The channel may be formed between overlapping layers of flexible material, which may be bonded together where they extend over the reinforcement member and be unbonded together between turns of the reinforcement member. The channel is preferably open at one end and closed at its opposite end.

According to another aspect of the present invention there is provided vacuum cleaner equipment including a vacuum cleaner machine and a hose according to the above aspect of the invention, characterised in that the equipment includes a passage connecting the outlet of the machine with the channel.

The passage preferably includes a valve operable to connect the channel to or isolate the channel from the outlet. The vacuum cleaner equipment may include a passage connecting the inlet of the machine with the channel such that air can be withdrawn from the channel and the hose retracted. The passage preferably includes a valve operable to connect the channel to or isolate the channel from the inlet.

Vacuum cleaner equipment including a hose, according to the present invention, will now be described, by way of example, with reference to the accompanying drawing, in which:
- Figure 1: illustrates schematically the vacuum cleaner equipment;
- Figure 2: is a side elevation view of a part of the hose in a retracted state;
- Figure 3: is an enlarged sectional side elevation view of the hose in the retracted state;
- Figure 4: is a side elevation view of the part of the hose in an extended state; and
- Figure 5: is an enlarged sectional side elevation view of the hose in the extended state.

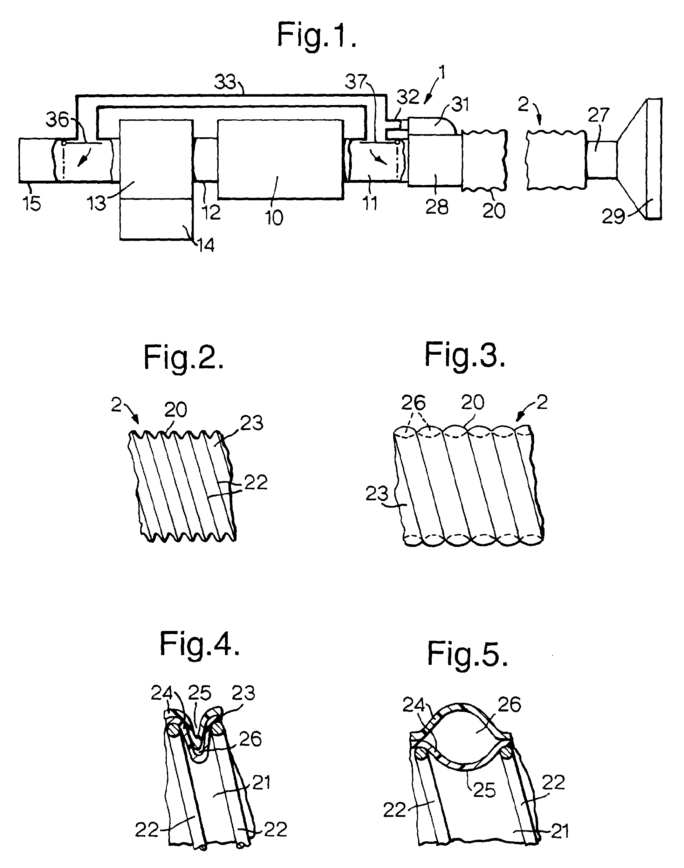

With reference first to Figure 1, the vacuum cleaner equipment includes a vacuum cleaner machine 1 and a hose 2. The machine 1 has a pump 10 or similar device for creating a reduced pressure at its inlet 11. The outlet 12 of the pump 10 connects to a filtration unit 13, which may include a porous dust-collection bag or a bagless container, so that dust and debris are collected in a bag or container 14 for disposal, the clean air flowing to an exhaust outlet 15. In an alternative arrangement, the pump could be connected instead at the outlet of the filtration unit. As so far described, the vacuum cleaner equipment is conventional.

The hose 2 is shown in more detail in Figures 2 to 5 and differs from conventional hoses. The hose 2 has a corrugated flexible wall 20 defining an axial, central main bore 21 along the hose. The wall 20 is made up of an inner helical reinforcing element 22, such as a coated wire, and an outer jacket 23 bonded to the wire. The outer jacket 23 comprises several layers 24 of a flexible thermoplastic material, such as PVC, formed by wrapping a ribbon of the material on the wire 22 such that adjacent turns overlap one another. The layers 24 are bonded to one another where they extend over the wire 22 but, in the region 25 between turns of the wire, they are unbonded so that there is a potential space 26 between the layers, which provides a compressible and expansible helical channel extending along the length of the hose between turns of the wire. The layers 24 may be left unbonded during the wrapping process or may be subsequently separated such as by means of a solvent or by air blown between the layers.

The hose 2 has couplings 27 and 28 at opposite ends. The coupling 27 at the end remote from the vacuum cleaner machine 1 serves to connect the hose 2 with a cleaning head 29. At this end of the hose 2, the channel 26 is blocked, such as by bonding the two layers 24 together. The coupling 28 at the opposite end makes connection between the main bore 21 of the hose 2 and the inlet 11 of the pump 10. The coupling 28 also has a side port 31 in communication with the helical channel 26. The side port 31 connects with a cooperating connector 32 on the vacuum cleaner machine 1, which is located at one end of a conduit or other passage 33, the opposite end of which is connected to the exhaust outlet 15. The conduit 33 also connects with the inlet 11 of the pump 10. The exhaust outlet 15 and inlet 11 both include valves 36 and 37 respectively. The valve 36 is manually operable to connect or isolate the conduit 33 from the exhaust outlet 15; the other valve 37 is operable to connect or isolate the conduit from the pump inlet 11.

In its normal state, as shown in Figures 2 and 3, the hose 2 is retracted to a relatively short length by the natural resilience of the wire 22, the channel 26 between the layers 24 being compressed closed. In this state, the hose 2 can be stored in a compact configuration. To extend the hose 2, air is supplied to the channel 26, so that the layers 24 are forced apart and the channel is inflated, as shown in Figures 4 and 5, thereby also forcing apart the turns of the reinforcing wire 22 and increasing the pitch of the wire. This is achieved by moving the valve 36 so that the pressure of the exhaust outlet 15 is communicated via the conduit 33 and the port 31 to the channel 26. This pressure may be supplied continuously to the channel, or the valve 36 may be closed after the channel 26 has been inflated, so that air is trapped in the channel. In this extended state of the hose 2, it may be used to carry out cleaning operations where the increased length of the hose is needed. The pressure of the air in the channel 26 is selected so that it is sufficient to extend the hose 2 fully but is not sufficient substantially to restrict bending.

After use, the hose 2 is retracted by returning outlet valve 36 to its original position and moving the inlet valve 37 so that the pump inlet 11 is connected to the port 31 and air is thereby pumped out of the channel 26.

The present invention enables a hose to be provided that has a compact retracted length when not in use and that can be extended when necessary without the user having to counteract any resilient force tending to shorten the hose.

The invention could be modified in various ways. For example, the compressible channel could be provided by a separate tube wrapped around the hose or extruded within a layer forming the wall of the hose. The wire reinforcement might not be needed in some hoses since the inflated channel alone could provide a support. It is not essential to pump air out of the channel after use since the resilience of the reinforcement could be sufficient to force the air out if the channel were left open. The channel could be open at the end remote from the machine, such as to provide a jet outlet helping to loosen dirt for easier extraction providing the restriction to flow was sufficient to enable the necessary pressure increase to expand the hose. Instead of using air to inflate the channel, it might be possible to use a liquid, such as a cleaning liquid, which would flow out of the remote end of the hose.

## Claims

1. A flexible hose (2) having a wall (20) defining a main bore (21) extending axially along the hose, the wall including a helical channel (26) extending around the hose along its length, **characterised in that** the channel (26) is expansible such that the hose can be extended by supplying fluid to the channel to expand the channel.

2. A flexible hose according to Claim 1, **characterised in that** the fluid is air.

3. A hose according to Claim 1 or 2 including a helical reinforcement member (22), and **characterised in that** the channel (26) extends between turns of the reinforcement member.

4. A hose according to any one of the preceding claims, **characterised in that** the channel (26) is formed between overlapping layers (24) of flexible material.

5. A hose according to Claims 3 and 4, **characterised in that** the layers (24) are bonded together where they extend over the reinforcement member (22) and are unbonded together between turns of the reinforcement member.

6. A hose according to any one of the preceding claims, **characterised in that** the channel (26) is open at one end and closed at its opposite end.

7. Vacuum cleaner equipment including a vacuum cleaner machine (1) and a hose (2) according to any one of the preceding claims, **characterised in that** the equipment includes a passage (31, 32, 33) connecting the outlet (12) of the machine (1) with the channel (26).

8. Vacuum cleaner equipment according to Claim 7, **characterised in that** the passage (31, 32, 33) includes a valve (36) operable to connect the channel (26) to or isolate the channel from the outlet (12).

9. Vacuum cleaner equipment according to Claim 7 or 8 including a passage (31, 32, 33) connecting the inlet (11) of the machine (1) with the channel (26) such that air can be withdrawn from the channel and the hose (2) retracted.

10. Vacuum cleaner equipment according to Claim 9, **characterised in that** the passage (31, 32, 33) includes a valve (37) operable to connect the channel (26) to or isolate the channel from the inlet (12).
